# EUROPEAN PATENT APPLICATION

(11) **EP 4 752 342 A1**
(43) Date of publication of application: **03.06.2026**
(21) Application number: 24846089.1
(22) Date of filing: 26.07.2024
(51) Int. Cl.: F01N 3/20, F02B 43/00, B63H 21/32, F01N 9/00, F02D 19/06

(54) **EXHAUST GAS AFTERTREATMENT SYSTEM AND SHIP HAVING SAME**

(30) Priority: 27.07.2023 KR 20230098116; 23.10.2023 KR 20230142169; 18.04.2024 KR 20240052158; 18.04.2024 KR 20240052159; 18.04.2024 KR 20240052160
(71) Applicant: Hyundai Heavy Industries Co., Ltd., Ulsan 44032 (KR)
(72) Inventor: KWON, Young Woo, Ulsan 44032 (KR); KIM, Tae Hwan, Ulsan 44032 (KR); LEE, Jung Ju, Ulsan 44032 (KR); KIM, Keon Ho, Ulsan 44032 (KR)
(74) Representative: Ribeiro, James Michael
(86) International application number: PCT/KR2024/010949
(87) International publication number: WO 2025/023788

(57) **Abstract**

This exhaust gas aftertreatment system comprises: a multi-fuel engine configured to selectively use two or more different types of fuel; and a catalyst chamber disposed downstream of the multi-fuel engine and including an upstream catalyst and a downstream catalyst located downstream of the upstream catalyst.

## Description

### TECHNICAL FIELD

### CROSS-REFERENCE TO RELATED APPLICATION

This application claims the benefit of the priority right based on Korean Patent Application No. 10-2023-0098116, filed on July 27, 2023, Korean Patent Application No. 10-2023-0142169, filed on October 23, 2023, Korean Patent Application No. 10-2024-0052158, filed on April 18, 2024, Korean Patent Application No. 10-2024-0052159, filed on April 18, 2024, and Korean Patent Application No. 10-2024-0052160, filed on April 18, 2024, in which all the contents disclosed in the corresponding Korean patent applications are incorporated herein by reference as a portion of this specification.

### TECHNICAL FIELD

The present invention relates to an exhaust gas aftertreatment system and a ship including the same.

### BACKGROUND ART

A ship includes a multi-fuel engine that uses two or more different types of fuel such as gaseous fuel (natural gas, methane, etc.) and liquid fuel (diesel fuel).

The gaseous fuel contains methane, which has a strong carbon-hydrogen bond to exist in a relatively stable state. Thus, when methane is not completely consumed in the engine, but is emitted, methane is not oxidized naturally under exhaust gas temperature conditions and thus is emitted directly into the atmosphere in an untreated state.

Meanwhile, methane (CH₄) is a greenhouse gas that exhibits a stronger greenhouse effect than an equivalent amount of carbon dioxide (CO₂). To address the issue of global warming, it is necessary to reduce the amount of methane emitted from the exhaust gases. Recently, with the strengthening of regulations to reduce emission of greenhouse gases (GHG) by international organizations such as the International Maritime Organization (IMO) and the European Union (EU), GHG emission regulations such as those for carbon dioxide (CO₂) and a carbon tax have been discussed, and a technology is required in which methane is not emitted into the atmosphere. In response to such demands, various studies are currently underway on methods for efficiently purifying the exhaust gases from the multi-fuel engines, which are a major cause of the environmental pollution, particularly for the efficient removal of methane, which is contained in large quantities in the exhaust gases.

In order to efficiently remove methane, an exhaust gas aftertreatment system for ship uses a methane oxidation catalyst (MOC). When a temperature of a methanation catalyst is higher than a temperature of the exhaust gas, the methanation catalyst may implement appropriate performance. In addition, the performance of the methanation catalyst may be easily degraded by sulfides and hydrocarbons.

The matters described in this background art are provided to enhance understanding of the background of the present invention and may include related art that is not already known to a person skilled in the art.

### DISCLOSURE OF THE INVENTION

### TECHNICAL PROBLEM

The present invention has been devised in consideration of the above-mentioned points, and an object of the present invention is to provide an exhaust gas aftertreatment system capable of extending a service life of a methanation catalyst by reducing or removing sulfur compounds, hydrocarbons, etc., contained in an exhaust gas in advance by a diesel oxidation catalyst before the exhaust gas is in contact with the methanation catalyst, and a ship including the same.

In addition, an object of the present invention is to provide an exhaust gas aftertreatment system, in which an injector mechanism is configured to inject oxidizable materials (diesel fuel, urea, etc.) to an upstream catalyst, thereby inducing a temperature increase of a downstream catalyst and improving methane reduction efficiency by the downstream catalyst, and a ship including the same.

In addition, an object of the present invention is to provide an exhaust gas aftertreatment system capable of improving regeneration efficiency of a catalyst for removing harmful substances from an exhaust gas, and a ship including the same.

The problem to be solved in the embodiments is not limited thereto, and the object or effect that can be understood from the means for solving the problem or the embodiment described below is also considered to be included.

### TECHNICAL SOLUTION

An exhaust gas aftertreatment system according to an embodiment of the present invention for achieving the above object may include: a multi-fuel engine configured to selectively use two or more different types of fuel; and a catalytic chamber disposed downstream of the multi-fuel engine and including an upstream catalyst and a downstream catalyst disposed downstream of the upstream catalyst. The upstream catalyst may be at least one of a diesel oxidation catalyst and a methanation catalyst, or a combination thereof, and the downstream catalyst may be at least one of a methanation catalyst and a diesel oxidation catalyst, or a combination thereof.

According to an embodiment, a content of a catalyst composition of the upstream catalyst may be relatively higher than a content of a catalyst composition of the downstream catalyst.

According to an embodiment, a content of a noble metal of the upstream catalyst may be relatively higher than a content of a noble metal of the downstream catalyst.

The catalytic chamber may be disposed downstream of a turbocharger.

The exhaust gas aftertreatment system according to an embodiment of the present invention may further include an inlet-side exhaust gas line connected from the multi-fuel engine to an inlet of the catalytic chamber, and an outlet-side exhaust gas line connected to an outlet of the catalytic chamber. The exhaust gas aftertreatment system for a ship according to an embodiment of the present invention may further include an inlet-side valve disposed in the inlet-side exhaust gas line and an outlet-side valve disposed in the outlet-side exhaust gas line.

The exhaust gas aftertreatment system according to an embodiment of the present invention may further include a bypass line that is branched from the inlet-side exhaust gas line so that the exhaust gas discharged from the multi-fuel engine bypasses the catalytic chamber and then is combined with the outlet-side exhaust gas line.

The exhaust gas aftertreatment system according to an embodiment of the present invention may further include a bypass valve disposed in the bypass line.

The catalytic chamber may be disposed upstream of the turbocharger.

The exhaust gas aftertreatment system according to an embodiment of the present invention may further include an inlet-side exhaust gas line connected from the multi-fuel engine to an inlet of the catalytic chamber, and an outlet-side exhaust gas line connected from the outlet of the catalytic chamber to an inlet of the turbine of the turbocharger.

An exhaust gas aftertreatment system according to an embodiment of the present invention may include: a multi-fuel engine configured to selectively use two or more different types of fuels; a catalytic chamber disposed downstream of the multi-fuel engine and including an upstream catalyst and a downstream catalyst disposed downstream of the upstream catalyst; an injector mechanism configured to inject an oxidizable material to the upstream catalyst upstream of the upstream catalyst; and a controller configured to control the injector mechanism.

The injector mechanism may be a diesel injector mechanism configured to inject diesel fuel to the upstream catalyst.

The diesel injector mechanism may include a diesel injector configured to inject the diesel fuel to the upstream catalyst, and a fuel pump unit configured to supply the diesel fuel to the diesel injector.

The controller may control the fuel pump unit so that an injection amount of diesel fuel by the diesel injector is determined on the basis of a target temperature of the downstream catalyst.

The injector mechanism may be a urea injector mechanism configured to inject urea to the upstream catalyst.

The urea injector mechanism may include a urea injector configured to inject the urea to the upstream catalyst, and a urea dosing unit fluidly connected to the urea injector through a urea line.

The controller may control the urea dosing unit so that an amount of urea injected by the urea injector is determined on the basis of the target temperature of the downstream catalyst.

The exhaust gas aftertreatment system according to an embodiment of the present invention may further include an inlet-side exhaust gas line connected from the multi-fuel engine to an inlet of the catalytic chamber, and an outlet-side exhaust gas line connected to an outlet of the catalytic chamber.

The exhaust gas aftertreatment system according to an embodiment of the present invention may further include an inlet-side valve disposed in the inlet-side exhaust gas line and an outlet-side valve disposed in the outlet-side exhaust gas line.

The exhaust gas aftertreatment system according to an embodiment of the present invention may further include a bypass line that is branched from the inlet-side exhaust gas line so that the exhaust gas discharged from the multi-fuel engine bypasses the catalytic chamber and then is combined with the outlet-side exhaust gas line.

The exhaust gas aftertreatment system according to an embodiment of the present invention may further include a bypass valve disposed in the bypass line.

The controller may be configured to control the injector mechanism, the inlet-side valve, the outlet-side valve, and the bypass valve according to the temperature of the downstream catalyst and whether gas slip occurs.

An exhaust gas aftertreatment system according to an embodiment of the present invention may include: a multi-fuel engine configured to selectively use two or more different types of fuel; a catalyst chamber disposed downstream of the multi-fuel engine and including an upstream catalyst and a downstream catalyst located downstream of the upstream catalyst; and a regeneration gas supply device configured to supply a regeneration gas to an inlet of the catalytic chamber.

The regeneration gas may include a reducing agent and an inert gas.

The regeneration gas supply device may include a reducing agent supply unit configured to supply a reducing agent and an inert gas supply unit configured to supply an inert gas.

The exhaust gas aftertreatment system according to an embodiment of the present invention may further include an inlet-side exhaust gas line connected to the inlet of the catalytic chamber. The reducing agent supply unit may be fluidly connected to the inlet-side exhaust gas line through the reducing agent supply line, and a reducing agent supply source may be disposed upstream of the reducing agent supply unit.

The inert gas supply unit may be fluidly connected to the inlet-side exhaust gas line through an inert gas supply line, and an inert gas supply source may be disposed upstream of the inert gas supply unit.

The inert gas supply unit may further include a heater configured to heat the inert gas.

The reducing agent supply line and the inert gas supply line may be joined to the inlet of the regeneration gas supply line, and the outlet of the regeneration gas supply line may be fluidly connected to a portion of the inlet-side exhaust gas line, which is adjacent to the catalytic chamber.

The exhaust gas aftertreatment system according to an embodiment of the present invention may further include a water injector mechanism configured to inject water to the downstream catalyst.

The water injector mechanism may be disposed downstream of the downstream catalyst in an inner space of the catalytic chamber.

The water injector mechanism may include a water pipe disposed downstream of the downstream catalyst, and a plurality of water injectors disposed from the water pipe toward the downstream catalyst.

A ship according to an embodiment of the present invention may include the exhaust gas aftertreatment system according to the above-described embodiment.

### ADVANTAGEOUS EFFECTS

According to the present invention, since the exhaust gas first reacts with the upstream catalyst, the exothermic reaction may occur at the upstream catalyst, and thus, the temperature of the inner space of the catalytic chamber may relatively increase. As a result, the temperature of the downstream catalyst may also increase, and thus, the downstream catalyst may more effectively remove methane contained in the exhaust gas (i.e., the reactivity of the downstream catalyst increases at the high temperature).

According to the present invention, the upstream catalyst may be configured with the relatively smaller size than that of the downstream catalyst. Therefore, when the performance of the upstream catalyst, which is in first contact with the exhaust gas, is deteriorated due to the removal of hydrocarbons, sulfur, etc., it may be easy to replace only the upstream catalyst, and the replacement cost of the upstream catalyst may be relatively low.

According to the present invention, the content of the catalytic composition in the upstream catalyst may be relatively higher than that in the downstream catalyst, and thus, during the process of the exhaust gas reacting with the upstream catalyst, the exothermic reaction may be induced in the upstream catalyst. As a result, the temperature of the inner space of the catalytic chamber may relatively increase, and since the temperature of the downstream catalyst is higher than the temperature of the exhaust gas, the downstream catalyst may more effectively remove methane contained in the exhaust gas.

According to the present invention, the content of the noble metal of the upstream catalyst may be relatively higher than that of the downstream catalyst, and thus, the performance of the upstream catalyst may not be degraded or be minimized due to hydrocarbon poisoning, sulfur poisoning, etc., and the exothermic reaction may be induced in the upstream catalyst during the process in which exhaust gas reacts with the upstream catalyst. As a result, the temperature of the inner space of the catalytic chamber may relatively increase, and since the temperature of the downstream catalyst is higher than the temperature of the exhaust gas, the downstream catalyst may more effectively remove methane contained in the exhaust gas. For example, since the upstream catalyst in the catalytic chamber is composed of the diesel oxidation catalyst, and the downstream catalyst is composed of a the methanation catalyst, sulfur oxides and hydrocarbons contained in the exhaust gas may be removed in advance before the exhaust gas comes into contact with the methanation catalyst, thereby extending the service life of the methanation catalyst.

According to the present invention, since the injector mechanism injects the oxidizable material (diesel fuel, urea, etc.) to the upstream catalyst, the oxidizable material may be oxidized by reacting with the upstream catalyst, and the temperature of the exhaust gas passing through the upstream catalyst may increase due to the oxidation of the oxidizable material. As a result, the increase in temperature of the downstream catalyst and the inner space of the catalytic chamber may be induced, and the methane reduction efficiency by the downstream catalyst may be significantly improved.

According to the present invention, the regeneration gas may be supplied to the inlet of the catalytic chamber through the regeneration gas supply device to improve the regeneration efficiency of the catalyst in the catalytic chamber.

According to the present invention, since water is directly injected to the downstream catalyst by the water injector mechanism, the adsorbate adhering to the downstream catalyst may be smoothly cleaned to enable the smooth regeneration of the downstream catalyst.

### BRIEF DESCRIPTION OF THE DRAWINGS

FIG. 1 is a schematic view illustrating an overall structure of an exhaust gas aftertreatment system according to an embodiment of the present invention.
FIG. 2 is a view illustrating a catalyst arrangement structure disposed in an inner space of a catalytic chamber of the exhaust gas aftertreatment system according to an embodiment of the present invention.
FIG. 3 is a view illustrating a catalyst arrangement structure disposed in an inner space of a catalytic chamber of an exhaust gas aftertreatment system according to another embodiment of the present invention.
FIG. 4 is a view illustrating a diesel injector mechanism mounted in a catalytic chamber of the exhaust gas aftertreatment system and a water injection mechanism disposed in the catalytic chamber according to an embodiment of the present invention.
FIG. 5 is a view illustrating a diesel injector mechanism mounted in a catalytic chamber of an exhaust gas aftertreatment system and a water injection mechanism disposed in the catalytic chamber according to another embodiment of the present invention.
FIG. 6 is a view illustrating a diesel injector mechanism mounted to an inlet-side exhaust gas line of the exhaust gas aftertreatment system and a water injection mechanism disposed in the catalytic chamber according to an embodiment of the present invention.
FIG. 7 is a view illustrating a diesel injector mechanism mounted to an inlet-side exhaust gas line of the exhaust gas aftertreatment system and a water injection mechanism disposed in a catalytic chamber according to another embodiment of the present invention.
FIG. 8 is a view illustrating a urea injector mechanism mounted in the catalytic chamber of the exhaust gas aftertreatment system and the water injection mechanism disposed in the catalytic chamber according to an embodiment of the present invention.
FIG. 9 is a view illustrating a urea injector mechanism mounted in the catalytic chamber of the exhaust gas aftertreatment system and a water injection mechanism arranged in the catalytic chamber according to another embodiment of the present invention.
FIG. 10 is a view illustrating a urea injector mechanism installed in the inlet-side exhaust gas line of the exhaust gas aftertreatment system and a water injection mechanism disposed in the catalytic chamber according to an embodiment of the present invention.
FIG. 11 is a view illustrating a urea injector mechanism mounted to an inlet-side exhaust gas line of the exhaust gas aftertreatment system and a water injection mechanism disposed in the catalytic chamber according to another embodiment of the present invention.
FIG. 12 is a view illustrating a regeneration gas supply device connected to the exhaust gas aftertreatment system according to an embodiment of the present invention.
FIG. 13 is a schematic view illustrating an overall structure of an exhaust gas aftertreatment system according to another embodiment of the present invention.

### MODE FOR CARRYING OUT THE INVENTION

Hereinafter, embodiments of the present invention will be described in detail with reference to the accompanying drawings. It is noted that the same or similar components in the drawings are designated by the same reference numerals as far as possible even if they are illustrated in different drawings. In the following description of the present invention, a detailed description of known functions and configurations incorporated herein will be omitted to avoid making the subject matter of the present invention unclear.

In the description of the embodiments of the present disclosure, the terms such as first, second, A, B, (a) and (b) may be used. These terms are used merely for distinguishing one component from another component and do not limit the component to the essence, sequence, order, etc., of the component.

In the embodiments of the present invention, the singular may also include the plural unless specifically stated otherwise in the phrase, and when it is described as "A and (or at least one) of B, C", it may include one or more of all combinations that may be combined with A, B, C.

In addition, when a component is described as being 'connected', 'coupled', or 'linked' to another component, it may include not only cases where the component is 'connected', 'coupled', or 'linked' directly to the other component, but also cases in which the component is 'connected', 'coupled', or 'linked' by another component between the component and the other component.

In addition, when described as being formed or arranged "above (upper)" or "below (lower)" each component, "above (upper)" or "below (lower)" includes not only the case where the two components are in direct contact with each other, but also the case in which one or more other components are formed or arranged between the two components. In addition, when expressed as "above (upper)" or "below (lower)", it may include the meaning of not only the upward direction but also the downward direction based on one component.

Unless terms used in the present disclosure are defined differently, the terms may be construed as meaning known to those skilled in the art. Generally, the terms defined in a generally used dictionary should be interpreted as having the same meanings as the contextual meanings of the relevant technology and should not be interpreted as having ideal or exaggerated meanings unless they are clearly defined in the present application.

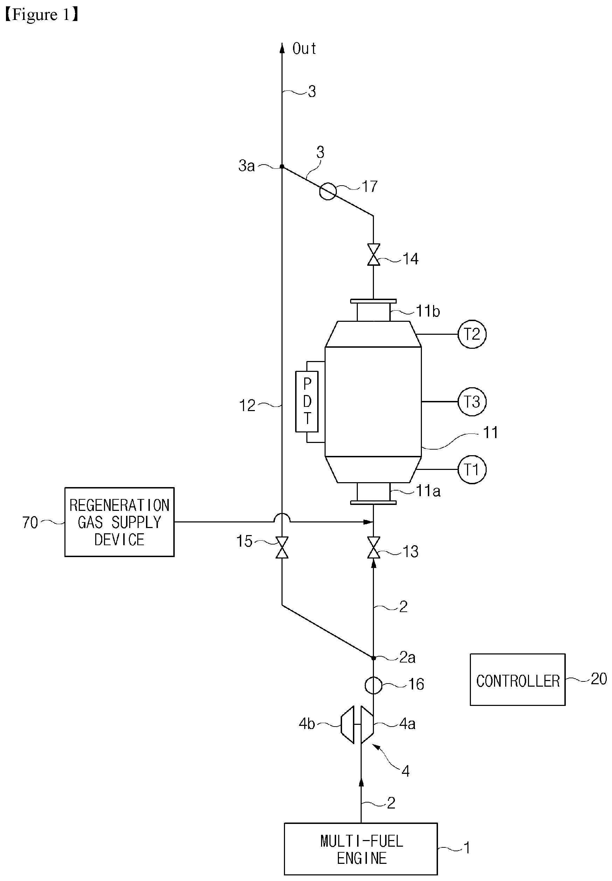

Referring to FIG. 1, an exhaust gas aftertreatment system according to an embodiment of the present invention may include a multi-fuel engine 1 and a catalytic chamber 11 disposed downstream of the multi-fuel engine 1.

The multi-fuel engine 1 may be configured to selectively use two or more different types of fuel such as gaseous fuel (natural gas, methane, etc.) and liquid fuel (diesel fuel). For example, the multi-fuel engine 1 may operate in at least one of a gaseous fuel operation mode, in which only the gaseous fuel is used for combustion, a liquid fuel operation mode, in which only the liquid fuel is used for combustion, and a mixed fuel operation mode, in which mixed fuel obtained by mixing the gaseous fuel and the liquid fuel is used for combustion.

The catalytic chamber 11 may include a plurality of catalysts disposed therein, and the plurality of catalysts may be configured to remove various harmful substances contained in an exhaust gas discharged from the multi-fuel engine 1. The catalytic chamber 11 may have an inlet 11a, through which the exhaust gas is introduced, and an outlet 11b, through which the exhaust gas is discharged. The plurality of catalysts may be disposed in the catalytic chamber 11 so as to be spaced apart along a flow direction of the exhaust gas within the inner space of the catalytic chamber 11.

FIG. 1 illustrates a low-pressure type exhaust gas aftertreatment system in which the catalytic chamber 11 is disposed downstream of a turbocharger 4. That is, the exhaust gas aftertreatment system illustrated in FIG. 1 may be a low-pressure type exhaust gas aftertreatment system in which a low-pressure exhaust gas discharged from the turbocharger 4 is introduced into the catalytic chamber 11.

Referring to FIG. 1, an inlet-side exhaust gas line 2 may be connected from the multi-fuel engine 1 to the inlet 11a of the catalytic chamber 11, and an outlet-side exhaust gas line 3 may be connected to the outlet 11b of the catalytic chamber 11. The exhaust gas discharged from the multi-fuel engine 1 and the turbocharger 4 may be introduced into the inlet 11a of the catalytic chamber 11 through an inlet-side exhaust gas line 2, harmful substances contained in the exhaust gas passing through the catalytic chamber 11 may be removed by the plurality of catalysts, and the exhaust gas from which the harmful substances have been removed may be discharged to the outside through the outlet-side exhaust gas line 3 from the outlet 11b of the catalytic chamber 11.

The turbocharger 4 may be disposed in the inlet-side exhaust gas line 2, and the turbocharger 4 may include a turbine 4a that rotates by the exhaust gas and a compressor 4b that compresses intake air. The turbine 4a of the turbocharger 4 may be disposed in the inlet-side exhaust gas line 2. Thus, the exhaust gas discharged from the multi-fuel engine 1 may be introduced into the inlet 11a of the catalytic chamber 11 after passing through the turbine 4a of the turbocharger 4.

The low-pressure type exhaust gas aftertreatment system according to an embodiment of FIG. 1 may further include a bypass line 12, which is branched from a branching point 2a of the inlet-side exhaust gas line 2 so that the exhaust gas discharged from the multi-fuel engine 1 bypasses the catalytic chamber 11 and then is joined to a joining point 3a of the outlet-side exhaust gas line 3. The branching point 2a of the inlet-side exhaust gas line 2 may be disposed downstream of the turbine 4a of the turbocharger 4, and thus, the inlet of the bypass line 12 may be connected to the inlet-side exhaust gas line 2 at a downstream point of the turbine 4a of the turbocharger 4.

Referring to FIG. 1, an inlet-side valve 13 may be disposed in the inlet-side exhaust gas line 2, and an outlet-side valve 14 may be disposed in the outlet-side exhaust gas line 3. The inlet-side valve 13 and/or the outlet-side valve 14 may be selectively opened and closed, and thus, the exhaust gas may pass through or not pass through the catalytic chamber 11.

Referring to FIG. 1, a bypass valve 15 may be disposed in the bypass line 12, and also, since the bypass valve 15 is selectively opened and closed, the exhaust gas may pass through or not pass through the bypass valve 15.

For initial performance verification, methane meters may be selectively installed, and after the performance verification is completed, the methane meters 16 and 17 may be separated. For example, as illustrated in FIG. 1, the inlet-side methane meter 16 may be detachably installed in the inlet-side exhaust gas line 2, and the inlet-side methane meter 16 may measure a methane concentration in the exhaust gas introduced into the inlet 11a of the catalytic chamber 11. The outlet-side methane meter 17 may be detachably installed in the outlet-side exhaust gas line 3, and the outlet-side methane meter 17 may measure a methane concentration in the exhaust gas discharged from the outlet 11b of the catalytic chamber 11.

Referring to FIG. 1, an inlet-side temperature sensor T1 may be disposed at a portion adjacent to the inlet 11a of the catalytic chamber 11, and the inlet-side temperature sensor T1 may be configured to measure a temperature at an upstream side of the catalysts of the catalytic chamber 11. An outlet-side temperature sensor T2 may be disposed at a portion adjacent to the outlet 11b of the catalytic chamber 11, and the outlet-side temperature sensor T2 may be configured to measure a temperature at a downstream side of the catalysts in the catalytic chamber 11. An intermediate temperature sensor T3 may be disposed in the middle of the catalytic chamber 11 and may be configured to measure a temperature of a space between the chambers disposed within the catalytic chamber 11. A differential pressure gauge PDT may be mounted in the catalytic chamber 11, and the differential pressure gauge PDT may be configured to measure a pressure difference between the inlet-side pressure and the outlet-side pressure of the catalytic chamber 11.

The controller 20 may control operations of the inlet-side valve 13, the outlet-side valve 14, the bypass valve 15, etc., on the basis of the methane concentration in the exhaust gas, which is measured by the inlet-side methane sensor 16, the methane concentration in the exhaust gas, which is measured by the outlet-side methane sensor 17, the temperature measured by the inlet-side temperature sensor T1, the temperature measured by the outlet-side temperature sensor T2, the temperature measured by the intermediate temperature sensor T3, the pressure measured by the differential pressure meter PDT, etc.

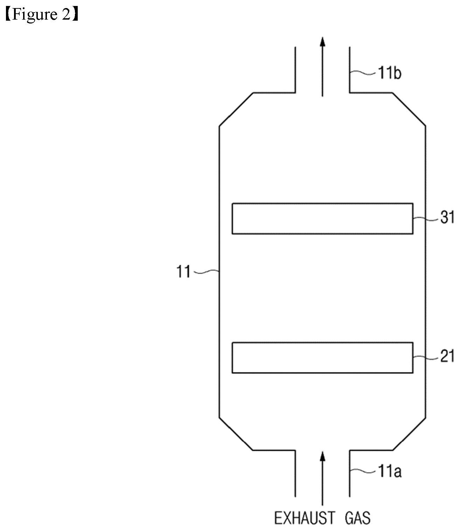

FIG. 2 is a view illustrating an example of a catalyst arrangement structure disposed in the inner space of the catalytic chamber 11 of the exhaust gas aftertreatment system according to an embodiment of the present invention. Referring to FIG. 2, the catalytic chamber 11 may include an upstream catalyst 21 disposed adjacent to the inlet of the catalytic chamber 11 and a downstream catalyst 31 disposed adjacent to the outlet of the catalytic chamber 11. The upstream catalyst 21 and the downstream catalyst 31 may be oxidation catalysts. The upstream catalyst 21 may be at least one of a diesel oxidation catalyst and a methanation catalyst, or a combination thereof, and the downstream catalyst 31 may be at least one of a methanation catalyst and a diesel oxidation catalyst, or a combination thereof.

According to an embodiment of FIG. 2, the upstream catalyst 21 may be a diesel oxidation catalyst (DOC), which is configured to adsorb sulfur components in the exhaust gas, to reduce the sulfur components in the exhaust gas discharged from the upstream catalyst 21.

According to an embodiment of FIG. 2, the downstream catalyst 31 may be a methanation catalyst configured to remove methane generated from incomplete combustion of the gaseous fuel.

According to an embodiment, a content of the catalytic composition in the upstream catalyst 21 may be relatively less than a content of the catalytic composition in the downstream catalyst 31, and the upstream catalyst 21 may be configured with a relatively smaller size than that of the downstream catalyst 31. Thus, when performance of the upstream catalyst 21, which is in first contact with the exhaust gas, is deteriorated due to the reduction or removal of hydrocarbons, sulfur, etc., it may be easy to replace only the upstream catalyst 21, and replacement costs of the upstream catalyst 21 may be relatively reduced. A replacement cycle of the upstream catalyst 21 may be appropriately determined through various methods that are capable of directly or indirectly confirming the performance of the upstream catalyst 21, such as a counting method of a driving time, the methanation reduction performance, and the temperature increase.

According to another embodiment, the content of the catalytic composition in the upstream catalyst 21 may be relatively higher than that in the downstream catalyst 31, and thus, during the process of the exhaust gas reacting with the upstream catalyst 21, the exothermic reaction may be induced in the upstream catalyst 21. As a result, the temperature of the exhaust gas passing through the upstream catalyst 21 may relatively increase due to an exothermic reaction of the upstream catalyst 21. Thus, the temperature of the downstream catalyst 31 may increase to a reaction temperature by the exhaust gas discharged from the upstream catalyst 21, and thus, the downstream catalyst 31 may more effectively remove methane contained in the exhaust gas.

According to another embodiment, a content of the noble metal of the upstream catalyst 21 may be relatively higher than that of the downstream catalyst 31, and thus, the performance of the upstream catalyst 21 may not be degraded or be minimized due to hydrocarbon poisoning, sulfur poisoning, etc., and the exothermic reaction may be induced in the upstream catalyst 21 during the process in which exhaust gas reacts with the upstream catalyst 21. As a result, the temperature of the exhaust gas passing through the upstream catalyst 21 may relatively increase due to an exothermic reaction of the upstream catalyst 21. Thus, the temperature of the downstream catalyst 31 may increase to a required reaction temperature by the exhaust gas discharged from the upstream catalyst 21, and thus, the downstream catalyst 31 may more effectively remove methane contained in the exhaust gas.

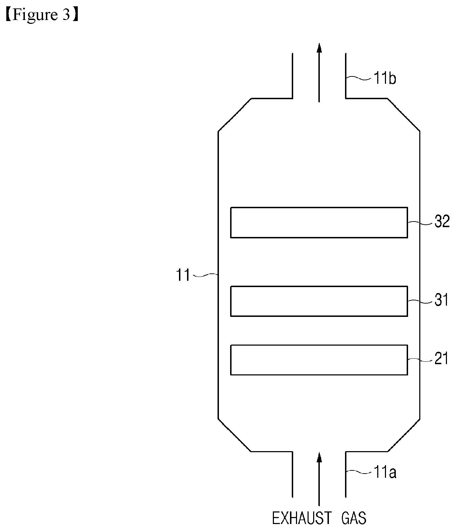

FIG. 3 is a view illustrating an example of a catalyst arrangement structure disposed in the inner space of the catalytic chamber 11 of the exhaust gas aftertreatment system according to another embodiment of the present invention. Referring to FIG. 3, the catalytic chamber 11 may include an upstream catalyst 21 disposed adjacent to an inlet of a catalytic chamber 11, and a plurality of downstream catalysts 31 and 32 disposed downstream of the upstream catalyst 21. The plurality of downstream catalysts 31 and 32 may include a first downstream catalyst 31 disposed downstream of the upstream catalyst 21, and a second downstream catalyst 32 disposed downstream of the first downstream catalyst 31. The second downstream catalyst 32 may be disposed adjacent to an outlet 11b of the catalytic chamber 11. The upstream catalyst 21 and the downstream catalysts 31 and 32 may be oxidation catalysts. The upstream catalyst 21 may be at least one of a diesel oxidation catalyst and a methanation catalyst, or a combination thereof, and the downstream catalysts 31 and 31 may be at least one of a methanation catalyst and a diesel oxidation catalyst, or a combination thereof.

According to an embodiment of FIG. 3, the upstream catalyst 21 may be a diesel oxidation catalyst (DOC), which is configured to adsorb sulfur components in the exhaust gas, to reduce the sulfur components in the exhaust gas discharged from the upstream catalyst 21.

According to an embodiment of FIG. 3, the first downstream catalyst 31 and the second downstream catalyst 32 may be methanation catalysts configured to remove methane generated from incomplete combustion of the gaseous fuel.

According to an embodiment, an amount of catalytic composition in the first downstream catalyst 31 may be equal to an amount of catalytic composition in the second downstream catalyst 32. In addition, an amount of catalytic composition in the upstream catalyst 21 may be relatively less than an amount of catalytic composition in each of the downstream catalysts 31 and 32, and the upstream catalyst 21 may be configured with a relatively smaller size than that of each of the downstream catalysts 31 and 32. Thus, when performance of the upstream catalyst 21 is deteriorated due to the removal of hydrocarbons, sulfur, etc., it may be easy to replace only the upstream catalyst 21, and replacement costs of the upstream catalyst 21 may be relatively low.

According to another embodiment, the content of the catalytic composition in the upstream catalyst 21 may be relatively higher than that in each of the downstream catalysts 31 and 32, and thus, during the process of the exhaust gas reacting with the upstream catalyst 21, the exothermic reaction may be induced in the upstream catalyst 21. As a result, the temperature of the exhaust gas passing through the upstream catalyst 21 may relatively increase due to an exothermic reaction of the upstream catalyst 21. Thus, the temperature of the downstream catalyst 31 may increase to a required reaction temperature by the exhaust gas discharged from the upstream catalyst 21, and thus, each of the downstream catalysts 31 and 32 may more effectively remove methane contained in the exhaust gas.

According to another embodiment, a content of the noble metal of the upstream catalyst 21 may be relatively higher than that of each of the downstream catalysts 31 and 32, and thus, the performance of the upstream catalyst 21 may not be degraded or be minimized due to hydrocarbon poisoning, sulfur poisoning, etc., and the exothermic reaction may be induced in the upstream catalyst 21 during the process in which exhaust gas reacts with the upstream catalyst 21. As a result, the temperature of the exhaust gas passing through the upstream catalyst 21 may relatively increase due to an exothermic reaction of the upstream catalyst 21. Thus, the temperature of the downstream catalyst 31 may increase to a required reaction temperature by the exhaust gas discharged from the upstream catalyst 21, and thus, each of the downstream catalysts 31 and 32 may more effectively remove methane contained in the exhaust gas.

An inlet-side temperature sensor T1 may measure an upstream temperature of the upstream catalyst 21, an outlet-side temperature sensor T2 may measure a downstream temperature of each of the downstream catalysts 31 and 32, and an intermediate-side temperature sensor T3 may measure a temperature of a space between the upstream catalyst 21 and each of the downstream catalysts 31 and 32. Since the intermediate-side temperature sensor T3 measures the temperature of the space between the upstream catalyst 21 and each of the downstream catalysts 31 and 32, a temperature increase of the exhaust gas caused by the upstream catalyst 21 may be substantially detected.

As described above, since the upstream catalyst 21 is disposed upstream of the downstream catalyst 22, the upstream catalyst 21 may be in contact with and react with the exhaust gas rather than the downstream catalyst 22. Thus, the exhaust gas in which hydrocarbons (HC) and sulfur have been previously reduced or removed by the upstream catalyst 21 may be in contact with and reacts with the downstream catalysts 31 and 32, and thus, methane contained in the exhaust gas may be efficiently removed or reduced by the downstream catalysts 31 and 32, which are methane oxidation catalysts, and a service life of the downstream catalysts 31 and 32 may be extended.

In addition, since the exhaust gas first reacts with the upstream catalyst 21, an exothermic reaction may occur in the upstream catalyst 21. Thus, the temperature of the exhaust gas passing through the upstream catalyst 21 may relatively increase due to the exothermic reaction of the upstream catalyst 21. As a result, the temperature of the downstream catalyst 31 may increase to the required reaction temperature by the exhaust gas discharged from the upstream catalyst 21, and thus, each of the downstream catalysts 31 and 32 may more effectively remove methane contained in the exhaust gas.

The exhaust gas aftertreatment system 10 for a ship according to an embodiment of the present invention may further include an injector mechanism configured to inject a oxidizable material to the upstream catalyst 21 at a position upstream of the upstream catalyst 21. According to an embodiment, the oxidizable material may be at least one of diesel fuel, LNG, methanol, ethanol, or urea, or a combination of above-described two or more fuel. Since the oxidizable material is oxidized by reacting with the upstream catalyst 21, the temperature of the exhaust gas passing through the upstream catalyst 21 may relatively increase due to the oxidation reaction of the oxidizable material, and each of the downstream catalysts 31 and 32 may increase to the required reaction temperature by the exhaust gas discharged from the upstream catalyst 21. That is, the temperature of each of the downstream catalysts 31 and 32 may increase by the exhaust gas that increases in temperature by the upstream catalyst 21, and thus, the methane reduction efficiency due to the downstream catalysts 31 and 32 may be significantly improved. The injector mechanism may be disposed upstream of the upstream catalyst 21. For example, the injector mechanism may be disposed at a portion of the catalytic chamber 11 adjacent to the inlet 11a of the catalytic chamber 11 or at a portion of the inlet-side exhaust gas line 2, which is adjacent to the catalytic chamber 11. The controller 20 may be configured to control the injector mechanism, the upstream valve 13, the downstream valve 14, and the bypass valve 15 on the basis of the temperature of each of the downstream catalysts 31 and 32 and whether gas slip occurs in the multi-fuel engine.

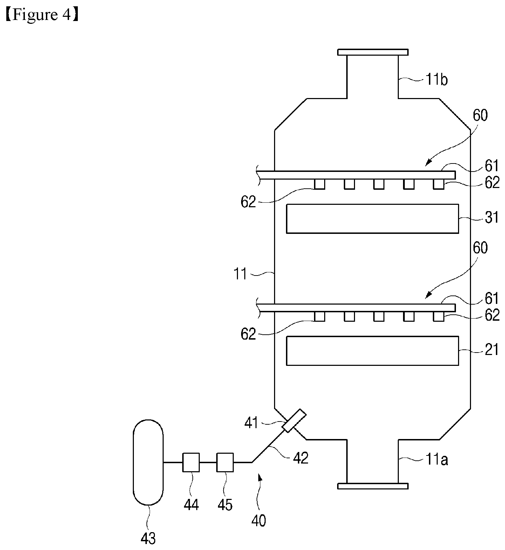

According to an embodiment of FIGS. 4 to 7, the injector mechanism may be a diesel injector mechanism 40 that injects the diesel fuel to the upstream catalyst 21.

Referring to FIGS. 4 to 7, the diesel injector mechanism 40 may include a diesel injector 41 that injects the diesel fuel to the upstream catalyst 21, a diesel fuel tank 43 fluidly connected to the diesel injector 41 through a diesel fuel line 42, a fuel pump unit 44 configured to supply the diesel fuel to the diesel injector 41, and a fuel dosing unit 45 configured to adjust a flow rate of the diesel fuel. The fuel pump unit 44 may be constituted by a fuel pump and peripheral devices thereof, and the fuel dosing unit 45 may be constituted by a fuel flow meter, a fuel flow regulating valve, and peripheral devices thereof.

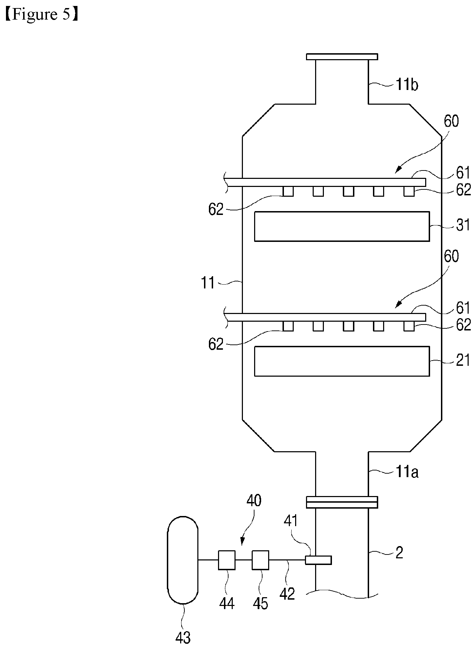

Referring to FIGS. 4 and 5, the diesel injector 41 may be installed in the catalytic chamber 11 adjacent to the inlet 11a of the catalytic chamber 11.

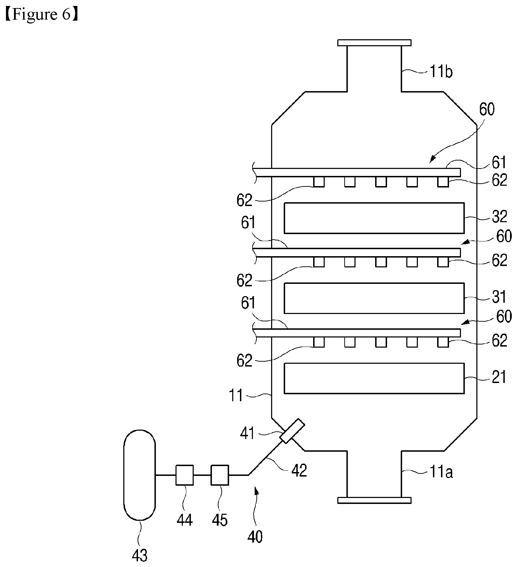

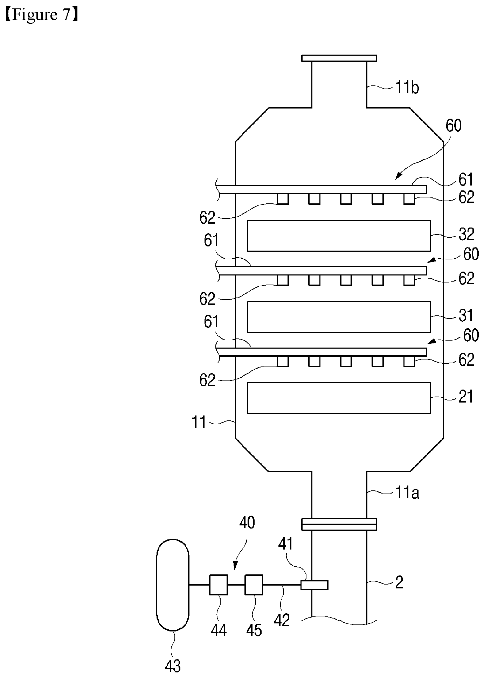

Referring to FIGS. 6 and 7, the diesel injector 41 may be installed in the inlet-side exhaust gas line 2.

As the diesel fuel is injected by the diesel injector 41 into the upstream catalyst 21, the diesel fuel may be oxidized, and the temperature of the exhaust gas passing through the upstream catalyst 21 may relatively increase due to the oxidation reaction of the diesel fuel. Thus, the temperature of the downstream catalyst 31 may increase to the reaction temperature due to the exhaust gas discharged from the upstream catalyst 21. According to an embodiment, the controller 20 may control the fuel pump unit 44 so that an amount of diesel fuel injected by the diesel injector 41 is determined on the basis of a target temperature (e.g., about 300°C to about 500°C) of the downstream catalyst 31 and 32 which are capable of optimizing the removal efficiency of methane.

According to another embodiment, the controller 20 may determine whether the temperature of the downstream catalysts 31 and 32 exceeds an allowable temperature on the basis of the upstream temperature of the upstream catalyst 21, which is measured by the inlet-side temperature sensor T1, the downstream temperature of each of the downstream catalysts 31 and 32, which is measured by the outlet-side temperature sensor T2, and the temperature of the space between the upstream catalyst 21 and each of the downstream catalysts 31 and 32, which is measured by the intermediate-side temperature sensor T3. When the temperature of each of the downstream catalysts 31 and 32 exceeds the allowable temperature, the controller 20 may control the fuel pump unit 44 to reduce the injection amount of diesel fuel, adjust an opening degree of the bypass valve 15 so that a portion of the exhaust gas passes through the bypass line 12, and close the upstream-side valve 13 and the downstream-side valve 14 to block a passage of the exhaust gas through the catalytic chamber 11. According to further another embodiment, when the gas trip occurs in the multi-fuel engine 1, the controller 20 may stop the fuel pump unit 44 so that the injection of diesel fuel is stopped, close the upstream valve 13 and the downstream valve 14 to block the passage of the exhaust gas through the catalytic chamber 11, and fully open the bypass valve 15 so that the exhaust gas passes through the bypass line 12. When the gaseous fuel operation mode of the multi-fuel engine 1 is incomplete, misfires within the combustion chamber may occur at a level equal to or higher than a certain threshold. In this case, the multi-fuel engine 1 is switched to the liquid fuel operation mode, and this situation may be referred to as "gas trip". In the event of such the gas slip, the controller 20 may stop the fuel pump unit 44 to stop the injection of diesel fuel. In addition, the controller 20 may fully open the bypass valve 15 and close the upstream valve 13 and the downstream valve 14 so that the exhaust gas passes only through the bypass line 12 and does not pass through the catalytic chamber 11.

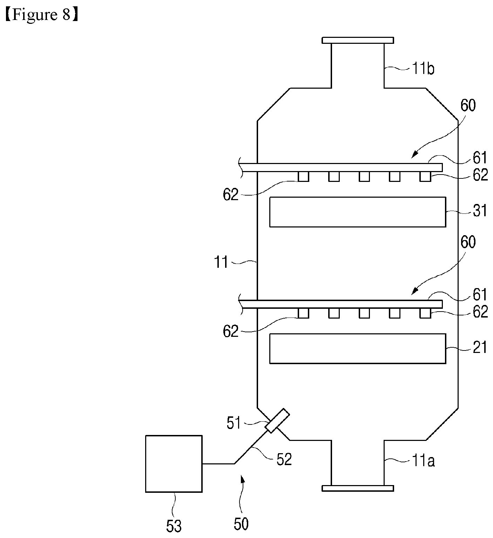

According to an embodiment of FIGS. 8 to 11, the injector mechanism may be a urea injector mechanism 50, which is configured to inject urea to the upstream catalyst 21 upstream of the upstream catalyst 21.

Referring to FIGS. 8 to 11, the urea injector mechanism 50 may include a urea injector 51 that injects the urea to the upstream catalyst 21, and a urea dosing unit 53 fluidly connected to the urea injector 51 through a urea line 52. Since the urea dosing unit 53 is connected to the urea supply system of an SCR catalytic mechanism, the urea dosing unit 53 may utilize the urea supply system of the SCR catalytic mechanism.

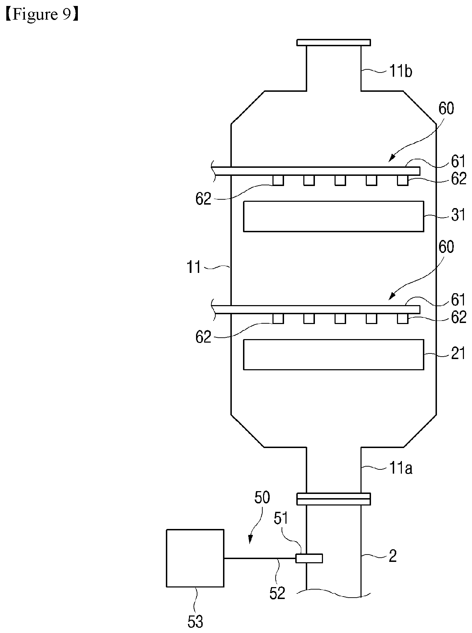

Referring to FIGS. 8 and 9, the urea injector 51 may be installed in the catalytic chamber 11 adjacent to the inlet 11a of the catalytic chamber 11.

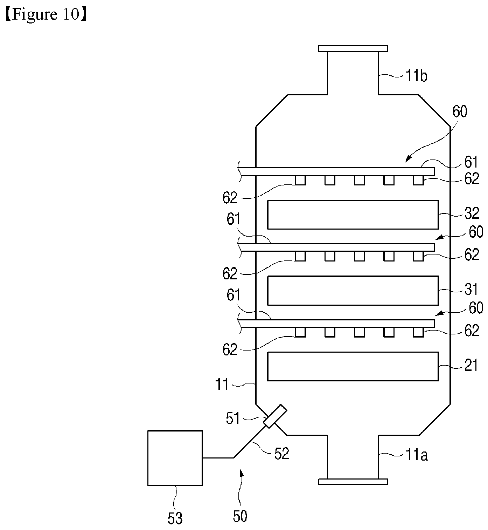

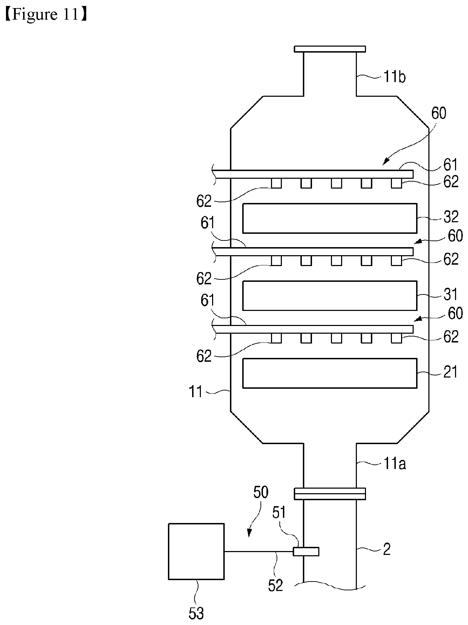

Referring to FIGS. 10 and 11, the urea injector 51 may be installed at a portion of the inlet-side exhaust gas line 2, which is adjacent to the catalytic chamber 11.

As urea is injected by the urea injector 51 to the upstream catalyst 21, the urea may be oxidized, and the temperature of the exhaust gas passing through the upstream catalyst 21 may increase relatively due to the oxidation reaction of the urea. Thus, since the temperature of the downstream catalyst 31 increases to the reaction temperature due to the exhaust gas discharged from the upstream catalyst 21, the temperature of each of the downstream catalyst 31 and 32 may be induced to increase.

According to an embodiment, the controller 20 may control the urea dosing unit 53 so that an amount of urea injected by the urea injector 51 is determined on the basis of the target temperature (e.g., about 300°C to about 500°C) of the downstream catalysts 31 and 32, which are capable of optimizing the removal efficiency of methane.

According to another embodiment, the controller 20 may determine whether the temperature of the downstream catalysts 31 and 32 exceeds an allowable temperature on the basis of the upstream temperature of the upstream catalyst 21, which is measured by the inlet-side temperature sensor T1, the downstream temperature of each of the downstream catalysts 31 and 32, which is measured by the outlet-side temperature sensor T2, and the temperature of the space between the upstream catalyst 21 and each of the downstream catalysts 31 and 32, which is measured by the intermediate-side temperature sensor T3. When the temperature of each of the downstream catalysts 31 and 32 exceeds the allowable temperature, the controller 20 may control the urea dosing unit 53 to reduce the injection amount of urea, adjust an opening degree of the bypass valve 15 so that a portion of the exhaust gas passes through the bypass line 12, and close the upstream-side valve 13 and the downstream-side valve 14 to block a passage of the exhaust gas through the catalytic chamber 11.

According to further another embodiment, when the gas trip occurs in the multi-fuel engine 1, the controller 20 may stop the urea dosing unit 53 so that the injection of urea is stopped, close the upstream valve 13 and the downstream valve 14 to block the passage of the exhaust gas through the catalytic chamber 11, and fully open the bypass valve 15 so that the exhaust gas passes through the bypass line 12. When the gaseous fuel operation mode of the multi-fuel engine 1 is incomplete, misfires within the combustion chamber may occur at a level equal to or higher than a certain threshold. In this case, the multi-fuel engine 1 is switched to the liquid fuel operation mode, and this situation may be referred to as "gas trip". In the event of such the gas slip, the controller 20 may stop the urea dosing unit 53 to stop the fuel injection of urea. In addition, the controller 20 may fully open the bypass valve 15 and close the upstream valve 13 and the downstream valve 14 so that the exhaust gas passes only through the bypass line 12 and does not pass through the catalytic chamber 11.

According to an embodiment of FIGS. 4 to 11, the upstream catalyst 21, which is a diesel oxidation catalyst, may have a relatively lower content of the noble metal than that of each of the downstream catalysts 31 and 32, which are methanol oxidation catalysts. Thus, the upstream catalyst 21 may be relatively less expensive than the downstream catalysts 31 and 32. Thus, hydrocarbons (HC), sulfur (S), etc., which are catalyst-poisoning components, may be primarily reduced or removed from the upstream catalyst 21 that is the diesel oxidation catalyst, and thus, the service life of the downstream catalysts 31 and 32 that are methanol oxidation catalysts may be extended.

The exhaust gas aftertreatment system according to an embodiment of the present invention may include a water injector mechanism 60 configured to regenerate the upstream catalyst 21 and the downstream catalysts 31 and 32 by injecting water into the upstream catalyst 21 and the downstream catalysts 31 and 32. The water injector mechanism 60 may directly inject water into the upstream catalyst 21 and the downstream catalysts 31 and 32 to wash adsorbate adsorbed on the upstream catalyst 21 and the downstream catalysts 31 and 32, thereby smoothly regenerating the upstream catalyst 21 and the downstream catalysts 31 and 32.

Referring to FIGS. 4 to 11, the water injector mechanism 60 may be disposed in the inner space of the catalytic chamber 11 downstream of the upstream catalyst 21 and downstream of each of the downstream catalyst 31, 32. The water injector mechanism 60 may include a water pipe 61 extending downstream of the upstream catalyst 21 and downstream of each downstream catalysts 31 and 32, and a plurality of water injectors 62 disposed from the water pipe 61 toward the upstream catalyst 21 and each of the downstream catalysts 31 and 32. A water supply source may be connected to the water pipe 61 through a water supply line, and a water pump may be disposed in the water supply line to supply water to the water pipe 61. Each of the water injectors 62 may directly inject water to the upstream catalyst 21 and each of the downstream catalysts 31 and 32 to remove the adsorbate adsorbed on the upstream catalyst 21 and downstream catalysts 31 and 32, thereby improving the regeneration efficiency of the upstream catalyst 21 and downstream catalysts 31 and 32.

Referring to FIG. 1, the exhaust gas aftertreatment system according to an embodiment of the present invention may further include a regeneration gas supply device 70 configured to supply a regeneration gas to the inlet 11a of the catalytic chamber 11.

According to an embodiment, the regeneration gas may include a reducing agent for reducing the catalysts 21, 31, and 32 and an inert gas for creating a reducing atmosphere in the inner space of the catalytic chamber 11. According to a specific embodiment, the reducing agent may be CH₄, H₂, etc., and the inert gas may be N₂ as a balance gas for forming the reducing atmosphere.

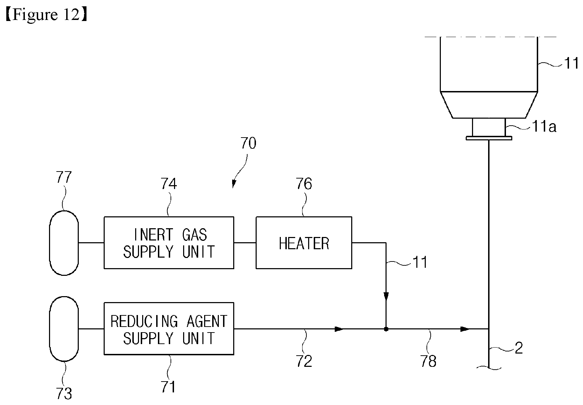

Referring to FIG. 12, the regeneration gas supply device 70 may include a reducing agent supply unit 71 for supplying the reducing agent and an inert gas supply unit 74 for supplying the inert gas.

The reducing agent supply unit 71 may be configured to supply the reducing agent for reducing an oxidized material adsorbed on surfaces of the catalysts 21, 31, and 32 into the inner space of the catalytic chamber 11. According to a specific embodiment, the reducing agent supply unit 71 may be fluidly connected to the inlet-side exhaust gas line 2 through the reducing agent supply line 72, the reducing agent supply source 73 may be disposed upstream of the reducing agent supply unit 71, and the reducing agent supply unit 71 may be configured to supply the reducing agent from the reducing agent supply source 73 to the inlet-side exhaust gas line 2.

The inert gas supply unit 74 may be configured to supply the inert gas to the inner space of the catalytic chamber 11 so as to create the reducing atmosphere without oxygen inside the catalytic chamber 11. According to a specific embodiment, the inert gas supply unit 74 may be fluidly connected to the inlet-side exhaust gas line 2 through the inert gas supply line 75, the inert gas supply source 77 may be disposed upstream of the inert gas supply unit 74, and the inert gas supply unit 74 may be configured to supply the inert gas from the inert gas supply source 77 to the inlet-side exhaust gas line 2.

According to an embodiment, the inert gas supply unit 74 may further include a heater 76 configured to heat the inert gas to a set temperature. The heater 76 may be disposed downstream of the inert gas supply unit 74, and a high-temperature inert gas heated by the heater 76 may be supplied to the inner space of the catalytic chamber 11 through the inlet-side exhaust gas line 2.

The reducing agent supply line 72 and the inert gas supply line 75 may be joined at an inlet of the regeneration gas supply line 78, and an outlet of the regeneration gas supply line 78 may be fluidly connected to a portion of the inlet-side exhaust gas line 2, which is adjacent to the catalytic chamber 11. The reducing agent supplied by the reducing agent supply line 72 and the inert gas supplied by the inert gas supply line 75 may be supplied to the inlet-side exhaust gas line 2 through the regeneration gas supply line 78. The reducing agent and inert gas may be supplied to the inlet 11a of the catalytic chamber 11 through the inlet-side exhaust gas line 2. As a result, the inner space of the catalytic chamber 11 may be brought to the reducing atmosphere by the reducing agent and the high-temperature inert gas, and the oxidized materials poisoned on the surfaces of each of the catalysts 21, 31, and 32 may be reduced by the reducing agent, and thus, each of the catalysts 21, 31, and 32 may be efficiently regenerated by the reducing agent and the inert gas.

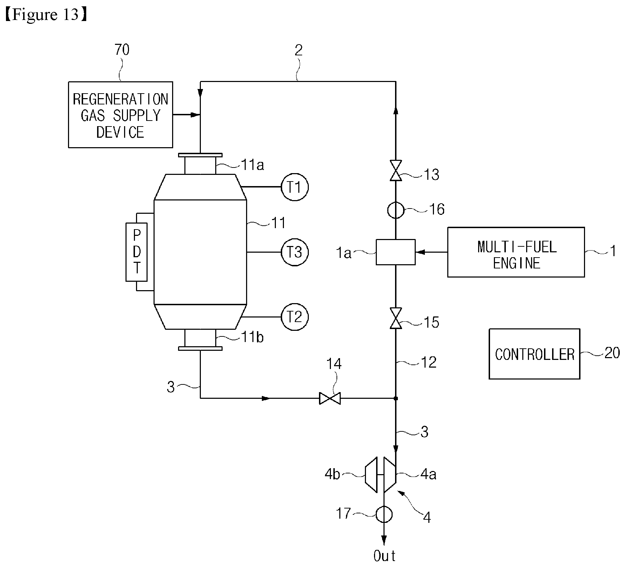

The catalytic arrangement structure of the catalytic chamber 11, the diesel injector mechanism, the urea injector mechanism, the water injector mechanism, and the regeneration gas supply device according to an embodiment of FIGS. 2 to 11 may not be limited to the low-pressure type exhaust gas aftertreatment system of FIG. 1, but may also be equally applied to the high-pressure type exhaust gas aftertreatment system of FIG. 13.

FIG. 13 illustrates a high-pressure type exhaust gas aftertreatment system in which the catalytic chamber 11 is disposed upstream of the turbocharger 4. That is, the exhaust gas aftertreatment system illustrated in FIG. 13 may be a high-pressure type exhaust gas aftertreatment system in which a high-pressure exhaust gas discharged from the multi-fuel engine 1 passes through the catalytic chamber 11 or the bypass line 12 before being introduced into the inlet of the turbine 4a of the turbocharger 4.

Referring to FIG. 13, an exhaust gas reservoir 1a may be disposed downstream of the multi-fuel engine 1, and the exhaust gas reservoir 1a may accommodate the exhaust gas discharged from the multi-fuel engine 1.

Referring to FIG. 13, an inlet-side exhaust gas line 2 may be connected from the exhaust gas reservoir 1a to the inlet 11a of the catalytic chamber 11, and an outlet-side exhaust gas line 3 may be connected from the outlet 11b of the catalytic chamber 11 to the inlet of the turbine 4a of the turbocharger 4. The exhaust gas discharged from the multi-fuel engine 1 may be introduced into the inlet 11a of the catalytic chamber 11 through the exhaust gas reservoir 1a and the inlet-side exhaust gas line 2, and harmful substances contained in the exhaust gas passing through the catalytic chamber 11 may be removed by the plurality of catalysts, and the exhaust gas from which the harmful substances have been removed may be discharged to the outside after passing through the turbine 4a of the turbocharger 4 through the outlet-side exhaust gas line 3 from the outlet 11b of the catalytic chamber 11.

The high-pressure type exhaust gas aftertreatment system according to an embodiment of FIG. 13 may further include a bypass line 12, which is branched from the inlet-side exhaust gas line 2 or the exhaust gas reservoir 1a so that the exhaust gas bypasses the catalytic chamber 11 and then is joined to the outlet-side exhaust gas line 3.

Referring to FIG. 13, an inlet-side valve 13 may be disposed in the inlet-side exhaust gas line 2, and an outlet-side valve 14 may be disposed in the outlet-side exhaust gas line 3. The inlet-side valve 13 and/or the outlet-side valve 14 may be selectively opened and closed, and thus, the exhaust gas may pass through or not pass through the catalytic chamber 11.

Referring to FIG. 13, a bypass valve 15 may be disposed in the bypass line 12, and also, since the bypass valve 15 is selectively opened and closed, the exhaust gas may pass through or not pass through the bypass valve 15.

For initial performance verification, a methane meter may be selectively installed, and after the performance verification is completed, the methane meter may be removed. According to an embodiment, only an outlet-side methane meter 17 may be disposed in the outlet-side exhaust gas line 3. For example, a probe may be installed at one side of the outlet-side exhaust gas line 3, and the outlet-side methane meter 17 may be detachably mounted to the probe. In addition, the methane meter may confirm upstream and downstream measurement levels of methane in the exhaust gas passing through the catalytic chamber 11 with a time difference by operations of the inlet-side valve 13, the outlet-side valve 14, and the bypass valve 15. According to another example, an inlet-side methane meter 16 may be disposed in the inlet-side exhaust gas line 2, and the inlet-side methane meter 16 may measure a methane concentration in the exhaust gas introduced into the inlet 11a of the catalytic chamber 11. The outlet-side methane meter 17 may be disposed in the outlet-side exhaust gas line 3, and the outlet-side methane meter 17 may measure a methane concentration in the exhaust gas discharged from the outlet 11b of the catalytic chamber 11.

Referring to FIG. 13, an inlet-side temperature sensor T1 may be disposed at a portion adjacent to the inlet 11a of the catalytic chamber 11, and the inlet-side temperature sensor T1 may be configured to measure a temperature at an upstream side of the catalysts of the catalytic chamber 11. An outlet-side temperature sensor T2 may be disposed at a portion adjacent to the outlet 11b of the catalytic chamber 11, and the outlet-side temperature sensor T2 may be configured to measure a temperature at a downstream side of the catalysts in the catalytic chamber 11. An intermediate temperature sensor T3 may be disposed in the middle of the catalytic chamber 11 and may be configured to measure a temperature of a space between the chambers disposed within the catalytic chamber 11. A differential pressure gauge PDT may be mounted in the catalytic chamber 11, and the differential pressure gauge PDT may be configured to measure a pressure difference between the inlet-side pressure and the outlet-side pressure of the catalytic chamber 11.

The controller 20 may control operations of the inlet-side valve 13, the outlet-side valve 14, the bypass valve 15, etc., on the basis of the methane concentration in the exhaust gas, which is measured by the inlet-side methane sensor 16, the methane concentration in the exhaust gas, which is measured by the outlet-side methane sensor 17, the temperature measured by the inlet-side temperature sensor T1, the temperature measured by the outlet-side temperature sensor T2, the temperature of the space between the upstream catalyst 21 and the downstream catalysts 31 and 32, which is measured by the intermediate temperature sensor T3, the pressure measured by the differential pressure meter PDT, etc.

In addition, a ship according to an embodiment of the present invention may include the exhaust gas aftertreatment system according to the above-described embodiment.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment. Therefore, the scope of the present invention is defined not by the detailed description of the invention but by the appended claims, and all differences within the scope will be construed as being included in the present invention.

## Claims

1. An exhaust gas aftertreatment system comprising:
a multi-fuel engine configured to selectively use two or more different types of fuel; and
a catalytic chamber disposed downstream of the multi-fuel engine and comprising an upstream catalyst and a downstream catalyst disposed downstream of the upstream catalyst.

2. The exhaust gas aftertreatment system of claim 1, wherein a content of a catalyst composition of the upstream catalyst is relatively higher than a content of a catalyst composition of the downstream catalyst.

3. The exhaust gas aftertreatment system of claim 1, wherein a content of a noble metal of the upstream catalyst is relatively higher than a content of a noble metal of the downstream catalyst.

4. The exhaust gas aftertreatment system of claim 1, further comprising:
an inlet-side exhaust gas line connected from the multi-fuel engine to an inlet of the catalytic chamber; and
an outlet-side exhaust gas line connected to an outlet of the catalytic chamber.

5. An exhaust gas aftertreatment system comprising:
a multi-fuel engine configured to selectively use two or more different types of fuels;
a catalytic chamber disposed downstream of the multi-fuel engine and comprising an upstream catalyst and a downstream catalyst disposed downstream of the upstream catalyst;
an injector mechanism configured to inject an oxidizable material to the upstream catalyst upstream of the upstream catalyst; and
a controller configured to control the injector mechanism.

6. The exhaust gas aftertreatment system of claim 5, wherein the injector mechanism is a diesel injector mechanism configured to inject diesel fuel to the upstream catalyst.

7. The exhaust gas aftertreatment system of claim 6, wherein the diesel injector mechanism comprises:
a diesel injector configured to inject the diesel fuel to the upstream catalyst; and
a fuel pump unit configured to supply the diesel fuel to the diesel injector.

8. The exhaust gas aftertreatment system of claim 5, wherein the injector mechanism is a urea injector mechanism configured to inject urea to the upstream catalyst.

9. The exhaust gas aftertreatment system of claim 8, wherein the urea injector mechanism comprises:
a urea injector configured to inject the urea to the upstream catalyst; and
a urea dosing unit fluidly connected to the urea injector through a urea line.

10. An exhaust gas aftertreatment system comprising:
a multi-fuel engine configured to selectively use two or more different types of fuel;
a catalyst chamber disposed downstream of the multi-fuel engine and comprising an upstream catalyst and a downstream catalyst located downstream of the upstream catalyst; and
a regeneration gas supply device configured to supply a regeneration gas to an inlet of the catalytic chamber.

11. The exhaust gas aftertreatment system of claim 10, wherein the regeneration gas comprises a reducing agent and an inert gas.

12. The exhaust gas aftertreatment system of claim 10, wherein the regeneration gas supply device comprises:
a reducing agent supply unit configured to supply a reducing agent; and
an inert gas supply unit configured to supply an inert gas.

13. The exhaust gas aftertreatment system of claim 12, wherein the inert gas supply unit further comprises a heater configured to heat the inert gas.

14. The exhaust gas aftertreatment system of claim 10, further comprising a water injector mechanism configured to inject water to the downstream catalyst.

15. A ship comprising the exhaust gas aftertreatment system of any one of claims 1, 5, and 10.
